# EUROPÄISCHE PATENTSCHRIFT

(11) **EP 2 356 405 B1**
(45) Veröffentlichungstag und Bekanntmachung des Hinweises auf die Patenterteilung: **11.10.2017**
(21) Anmeldenummer: 09736853.4
(22) Anmeldetag: 13.10.2009
(51) Int. Cl.: G01D 5/38, G01B 11/14

(54) **OPTISCHE POSITIONSMESSEINRICHTUNG**
OPTICAL POSITION MEASURING DEVICE
DISPOSITIF DE MESURE DE POSITION OPTIQUE

(30) Priorität: 07.11.2008 DE 102008043540
(43) Veröffentlichungstag der Anmeldung: 17.08.2011
(73) Patentinhaber: Dr. Johannes Heidenhain GmbH, 83301 Traunreut (DE)
(72) Erfinder: HOLZAPFEL, Wolfgang, 83119 Obing (DE); HÖFER, Volker, 83349 Palling (DE); REICHHUBER, Siegfried, 83371 Stein/Traun (DE); STEPPUTAT, Michael, 83278 Traunstein (DE)
(86) Internationale Anmeldenummer: PCT/EP2009/007329
(87) Internationale Veröffentlichungsnummer: WO 2010/051897

(56) Entgegenhaltungen:
- WO-A1-99/46603
- DE-A1-102005 043 569
- GAO ET AL: "A Three-axis Displacement Sensor with Nanometric Resolution" CIRP ANNALS, ELSEVIER BV, NL, CH, FR, Bd. 56, Nr. 1, 1. Januar 2007 (2007-01-01) , Seiten 529-532, XP022119624 ISSN: 0007-8506
- KIMURA A ET AL: "A two degree-of-freedom linear encoder for measurement of position and straightness" 23RD ASPE ANNUAL MEETING AND 12TH ICPE, OCTOBER 19-24, 2008 OREGON,, 1. Januar 2008 (2008-01-01), Seiten 550-553, XP009131278 in der Anmeldung erwähnt

## Beschreibung

Die vorliegende Erfindung betrifft eine optische Positionsmesseinrichtung gemäß dem Oberbegriff des Anspruchs 1.

Eine derartige optische Positionsmesseinrichtung ist etwa aus der DE 10 2005 043 569 A1 der Anmelderin bekannt. Diese Positionsmesseinrichtung dient zur Erfassung der Relativposition von zwei zueinander beweglichen Objekten und besteht aus einer Abtasteinheit, die mit einem der Objekte verbunden ist und einer Reflexions-Maßverkörperung, die mit dem anderen der beiden Objekte verbunden ist. Relative Positionsinformationen bzgl. der beiden Objekte resultieren hierbei aus der interferierenden Überlagerung mindestens zweier Mess-Teilstrahlenbündel mit mindestens einem Referenz-Strahlenbündel. Die Abtasteinheit umfasst verschiedene optische Komponenten, die derart angeordnet sind, dass zunächst ein einfallendes Strahlenbündel in der Abtasteinheit eine Aufspaltung in mindestens ein Mess-Strahlenbündel und in mindestens ein Referenz-Teilstrahlenbündel erfährt. Das Mess-Teilstrahlenbündel beaufschlagt die Reflexions-Maßverkörperung, wo dieses eine Aufspaltung in mindestens zwei Mess-Teilstrahlenbündel erfährt. Mindestens zwei in Richtung Abtasteinheit zurückreflektierte Mess-Teilstrahlenbündel werden jeweils mit einem Referenz-Teilstrahlenbündel zur interferierenden Überlagerung gebracht. Die überlagerten Mess-Teilstrahlenbündel und Referenz-Teilstrahlenbündel werden einer Detektoranordnung zugeführt, über die verschiebungsabhängige Abtastsignale erfassbar sind, aus denen Positionsinformationen bezüglich mindestens einer lateralen und mindestens einer vertikalen Verschiebungsrichtung der Objekte ableitbar sind.

Über eine derartige optische Positionsmesseinrichtung ist es demzufolge möglich, mit relativ geringem abtastseitigen Aufwand gleichzeitig mindestens einen lateralen und einen vertikalen Freiheitsgrad der zwei zueinander beweglichen Objekte zu erfassen. Für die Positionsmessung in Halbleiterfertigungseinrichtungen genügt diese Vorrichtung den entsprechenden Anforderungen. Steht jedoch wenig Bauraum für die Komponenten der Positionsmesseinrichtung zur Verfügung, so erweist sich die bekannte Lösung aus der DE 10 2005 043 569 A1 als zu voluminös bauend.

Aus der Publikation von A. Kimura, Y. Arai, W. Gao mit dem Titel "A twodegree-of-freedom linear encoder for measurement of position and straightness", Proceedings of 23rd ASPE Annual Meeting, Portland/USA, Oct. 19-24, 2008, von der bei der Bildung des Oberbegriffs von Anspruch 1 ausgegangen wurde, ist desweiteren bekannt, den Abtaststrahlengang so auszugestalten, dass das mindestens ein Referenz-Teilstrahlenbündel nicht die Reflexions-Maßverkörperung beaufschlagt. Dies bedeutet, dass ein oder mehrere Referenz-Teilstrahlenbündel bis zur Überlagerung mit dem jeweiligen Mess-Teilstrahlenbündel ausschließlich in der Abtasteinheit propagieren. Auf diese Art und Weise ist zwar ein kompakter bauendes System realisiert, jedoch erweist sich die vorgesehene Abtasteinheit mit einer Vielzahl von zueinander zu justierenden optischen Komponenten als sehr aufwändig in Bezug auf die Herstellung bzw. Montage. Zudem ist es sehr schwierig, die Vielzahl der vorgesehenen optischen Komponenten zueinander schwingungsstabil und driftfrei zu haltern.

Grundsätzlich ähnliche Messanforderungen bzgl. der gleichzeitigen Erfassung von lateralen und vertikalen Freiheitsgraden zweier zueinander beweglicher Objekte resultieren beispielsweise auch in Rastersondenmikroskopen. Dort stellt sich das Messproblem, dass die räumliche Position eines Auslegers, d.h. des sog. Cantilevers, hochgenau in mehreren räumlichen Freiheitsgraden erfasst werden muss. An der Unterseite des Auslegers ist die Rastersondenspitze angeordnet, mit dem die zu untersuchende Probe üblicherweise rasterförmig abgetastet wird.

In der Regel dienen zur positionsmäßigen Erfassung der Auslenkung des Auslegers kapazitive oder optische Positions-Messsysteme. Im Fall der Verwendung von optischen Systemen werden hierbei sog. Deflektometer eingesetzt. Diese sehen vor, einen Lichtstrahl auf die reflektierende Oberseite des Auslegers zu richten und mittels einer Quadrantendiode die Ablage des reflektierten Lichtstrahls von einer Ausgangsposition zu erfassen, d.h. mittels des Deflektometers werden letztlich Winkel gemessen und daraus auf die räumliche Auslenkung bzw. räumliche Position des Auslegers und damit der Rasterkraftsonde geschlossen. Nachteilig hieran ist, dass darüber eine lediglich indirekte Positionsbestimmung bzgl. der Auslenkung des Auslegers möglich ist.

Neben derartigen Deflektometern sind auch optische Systeme bekannt geworden, bei denen auf der Oberseite des Auslegers ein Beugungsgitter angeordnet wird. Dieses wird durch ein Strahlenbündel beleuchtet und die Auslenkung des Auslegers aus den reflektierten Beugungsintensitäten ermittelt. In diesem Zusammenhang sei z.B. auf die Veröffentlichung "Interdigital cantilevers for atomic force microscopy, S.R. Manalis, S.C. Minne, A. Atalar, C.F. Quate C, Appl. Phys. Letters 69 (2), 16. Dezember 1996, S. 3944 - 3946" verwiesen. Über diese Lösung ist ebenfalls keine hinreichend genaue Erfassung der räumlichen Auslenkung des Auslegers möglich.

Eine derartige messtechnische Aufgabenstellung ergibt sich nicht nur in Verbindung mit Rastersondenmikroskopen sondern allgemein immer dann, wenn eine präzise räumliche Positionsbestimmung in Bezug auf zwei zueinander bewegliche Objekte in mehr als einem Freiheitsgrad gefordert ist.

Aufgabe der vorliegenden Erfindung ist es, eine optische Positionsmesseinrichtung zu schaffen, die eine möglichst direkte, hochpräzise räumliche Positionsbestimmung in mehr als einem Freiheitsgrad ermöglicht. Die entsprechende Positionsmesseinrichtung sollte insbesondere auch unter beengten Platzverhältnissen verwendbar sein, wenn z.B. die abzutastende Reflexions-Maßverkörperung lediglich eine geringe räumliche Ausdehnung besitzt. Gleichzeitig sollte eine einfache Fertigung und Montage einer derartigen Positionsmesseinrichtung gewährleistet sowie ein schwingungsstabiler und driftfreier Aufbau möglich sein.

Diese Aufgabe wird erfindungsgemäß durch eine optische Positionsmesseinrichtung mit den Merkmalen des Anspruchs 1 gelöst.

Vorteilhafte Ausführungsformen der erfindungsgemäßen optischen Positionsmesseinrichtung ergeben sich aus den Maßnahmen in den abhängigen Ansprüchen.

Die erfindungsgemäße optische Positionsmesseinrichtung zur Erfassung der Relativposition von zwei zueinander beweglichen Objekten besteht aus einer Abtasteinheit, die mit einem der Objekte verbunden ist und einer Reflexions-Maßverkörperung, die mit dem anderen der beiden Objekte verbunden ist. Relative Positionsinformationen resultieren aus der interferierenden Überlagerung mindestens zweier Mess-Teilstrahlenbündel mit mindestens einem Referenz-Teilstrahlenbündel. Hierzu umfasst die Abtasteinheit verschiedene optische Komponenten, die derart angeordnet sind, dass ein einfallendes Strahlenbündel in der Abtasteinheit eine Aufspaltung in mindestens ein Mess-Strahlenbündel oder in mindestens zwei Mess-Teilstrahlenbündel sowie in mindestens ein Referenz-Teilstrahlenbündel erfährt. Das mindestens eine Mess-Strahlenbündel oder die mindestens zwei Mess-Teilstrahlenbündel beaufschlagen die Reflexions-Maßverkörperung und erfahren dort eine Aufspaltung, so dass mindestens zwei Mess-Teilstrahlenbündel in Richtung Abtasteinheit zurückreflektiert und jeweils mit einem Referenz-Teilstrahlenbündel zur interferierenden Überlagerung gebracht werden. Das mindestens eine Referenz-Teilstrahlenbündel beaufschlagt nicht die Reflexions-Maßverkörperung. Die überlagerten Mess-Teilstrahlenbündel und Referenz-Teilstrahlenbündel werden einer Detektoranordnung zugeführt, über die verschiebungsabhängige Abtastsignale erfassbar sind, aus denen Positionsinformationen bezüglich mindestens einer lateralen und mindestens einer vertikalen Verschiebungsrichtung der Objekte ableitbar sind. Zur Aufspaltung in mindestens ein Mess-Strahlenbündel oder in mindestens zwei Mess-Teilstrahlenbündel einerseits sowie in mindestens ein Referenz-Teilstrahlenbündel andererseits ist in der Abtasteinheit mindestens ein Aufspalt-Gitter angeordnet.

In der Abtasteinheit ist vorzugsweise ferner mindestens ein Vereinigungs-Gitter angeordnet, das die Mess- und Referenz-Teilstrahlenbündel beaufschlagen, bevor die überlagerten Mess-Teilstrahlenbündel und Referenz-Teilstrahlenbündel in Richtung der Detektoranordnung propagieren.

Mit Vorteil umfasst die Abtasteinheit eine Abtastplatte, die aus einem transparenten Trägerelement besteht, auf deren der Reflexions-Maßverkörperung zugewandten Vorderseite und/oder auf der der Reflexions-Maßverkörperung abgewandten Rückseite das mindestens eine Aufspalt-Gitter und das mindestens eine Vereinigungs-Gitter planar angeordnet sind.

Hierbei können auf der Vorder- und Rückseite der Abtastplatte weitere optisch wirksame Elemente in Form von Reflektorelementen und/oder weiterer Gitter ausgebildet sein.

Das Aufspalt-Gitter und/oder das Vereinigungs-Gitter können als eindimensionales Lineargitter und/oder als zweidimensionales Kreuzgitter ausgebildet sein.

Vorzugsweise weisen die verschiebungsabhängigen Abtastsignale einen Phasenversatz zueinander auf, der durch die Ausgestaltung des mindestens einen Vereinigungs-Gitters definiert einstellbar ist.

In einer möglichen Ausführungsform der erfindungsgemäßen optischen Positionsmesseinrichtung ist vorgesehen, dass in der Abtasteinheit ein von der Lichtquelle kommendes Strahlenbündel an einem ersten Aufspalt-Gitter eine Aufspaltung in ein Mess-Strahlenbündel und in zwei Referenz-Teilstrahlenbündel erfährt. Das Mess-Strahlenbündel erfährt dann an einem zweiten Aufspalt-Gitter eine Aufspaltung in ein erstes und zweites Mess-Teilstrahlenbündel, und das erste und zweite Mess-Teilstrahlenbündel propagiert jeweils in Richtung der Reflexions-Maßverkörperung. Dort treffen das erste und zweite Mess-Teilstrahlenbündel an unterschiedlichen Auftrefforten auf und erfahren jeweils eine Aufspaltung in weitere Mess-Teilstrahlenbündel, von denen mindestens eines mit einem der Referenz-Teilstrahlenbündel an mindestens einem Vereinigungs-Gitter interferierend zur Überlagerung gebracht wird.

Es kann ferner vorgesehen werden, dass die Abtasteinheit eine Fokussieroptik umfasst, über die eine Fokussierung eines Mess-Strahlenbündels oder eines Mess-Teilstrahlenbündels auf einen räumlich begrenzten Bereich der Reflexions-Maßverkörperung erfolgt.

Es ist hierbei möglich, dass die Fokussieroptik eine Kollimatorlinse und eine Blende und/oder eine Fresnellinse umfasst.

Desweiteren kann eine Lichtquelle außerhalb der Abtasteinheit angeordnet sein und zur Zuführung der von der Lichtquelle emittierten Strahlung ein Lichtleiter zwischen der Lichtquelle und der Abtasteinheit angeordnet werden.

In möglichen Ausführungsformen kann die Reflexions-Maßverkörperung mehrere eindimensionale Lineargitter oder ein zweidimensionales Kreuzgitter umfassen, die jeweils aus ein- oder zweidimensionalen, periodischen Anordnungen von Teilbereichen mit unterschiedlichen optischen Reflexionseigenschaften bestehen.

Es kann dabei vorgesehen werden, dass die Reflexions-Maßverkörperung als zweidimensionales Kreuzgitter ausgebildet ist, an dem eine Aufspaltung des auftreffenden Mess-Strahlenbündels in vier Mess-Teilstrahlenbündel resultiert, die eine Rückreflexion in Richtung der Abtasteinheit erfahren. Die Abtasteinheit umfasst als Aufspalt-Gitter ein zweidimensionales Kreuzgitter, an dem eine Aufspaltung des einfallenden Strahlenbündels in vier Referenz-Teilstrahlenbündel erfolgt. Ferner umfasst die Abtasteinheit vier eindimensionale Lineargitter als Vereinigungs-Gitter, welche die Mess- und Referenz-Teilstrahlenbündel beaufschlagen. Desweiteren umfasst die Abtasteinheit vier Detektoranordnungen mit jeweils mehreren Detektorelementen, über die jeweils verschiebungsabhängige, phasenverschobene Abtastsignale erfassbar sind.

Alternativ hierzu ist es möglich, dass die Reflexions-Maßverkörperung zwei eindimensionale Lineargitter umfasst, die in der Maßverkörperungsebene senkrecht zueinander angeordnet sind.

Vorzugsweise ist vorgesehen, dass ein oder mehrere Referenz-Teilstrahlenbündel bis zur Überlagerung mit dem jeweiligen Mess-Teilstrahlenbündel ausschließlich in der Abtasteinheit propagieren und in der Abtasteinheit bis zur Überlagerung mit dem jeweiligen Mess-Teilstrahlenbündel einen optischen Weg zurücklegen, der etwa dem bis zur Überlagerung zurückgelegten optischen Weg des jeweiligen Mess-Teilstrahlenbündels entspricht.

Ein vorteilhafte Anwendung der erfindungsgemäße optischen Positionsmesseinrichtung ist in einem Rastersondenmikroskop gegeben, bei dem die räumliche Auslenkung eines Auslegers über die erfindungsgemäße Positionsmesseinrichtung bestimmbar ist, an dessen Unterseite eine Rastersondenspitze und auf dessen Oberseite die Reflexions-Maßverkörperung angeordnet ist.

Über die erfindungsgemäßen Maßnahmen lässt sich sicherstellen, dass mittels einer äußerst kompakt bauenden optischen Positionsmesseinrichtung nicht nur die räumliche Position bei Verschiebebewegungen innerhalb einer Ebene (laterale Verschiebungsrichtungen) hochpräzise gemessen werden können, sondern auch eventuelle Verschiebebewegungen entlang einer hierzu senkrechten Achse (vertikale Verschiebungsrichtungen). Gleichzeitig ist aufgrund der Maßnahmen auf Seiten der Abtasteinheit eine einfache Fertigung und Montage derselben gewährleistet.

Selbstverständlich gibt es der erwähnten Anwendung in Rastersondenmikroskopen vielfältige weitere Einsatzmöglichkeiten für die erfindungsgemäße optische Positionsmesseinrichtung. Beispielsweise kann diese verwendet werden, um die räumliche Position eines Bondkopfes in sog. Draht- oder Die-Bondern oder aber die räumliche Position kleiner Bauteile hochpräzise zu erfassen etc..

Weitere Einzelheiten und Vorteile der vorliegenden Erfindung seien anhand der nachfolgenden Beschreibung von Ausführungsbeispielen erfindungsgemäßer Positionsmesseinrichtungen in Verbindung mit den Figuren erläutert.

Es zeigt
- Figur 1: eine schematisierte Darstellung des Abtaststrahlengangs in einer ersten Ausführungsform der erfindungsgemäßen optischen Positionsmesseinrichtung;
- Figur 2a, 2b: je eine Ansicht der Vorder- und Rückseite der Abtastplatte des ersten Ausführungsbeispiels der erfindungsgemäßen optischen Positionsmesseinrichtung;
- Figur 3: eine Draufsicht auf die Reflexions-Maßverkörperung des ersten Ausführungsbeispiels der erfindungsgemäßen optischen Positionsmesseinrichtung;
- Figur 4: eine schematisierte Blockschaltbild-Darstellung zur Erläuterung der Signalverarbeitung im ersten Ausführungsbeispiel der der erfindungsgemäßen optischen Positionsmesseinrichtung;
- Figur 5a - 5d: je eine schematisierte Darstellung unterschiedlicher Beleuchtungs-Varianten, die für die erfindungsgemäße optische Positionsmesseinrichtung geeignet sind;
- Figur 6: eine schematisierte Darstellung des Abtaststrahlengangs einer zweiten Ausführungsform der erfindungsgemäßen optischen Positionsmesseinrichtung;
- Figur 7a, 7b: je eine Ansicht der Ober- und Unterseite der Abtastplatte des zweiten Ausführungsbeispiels der erfindungsgemäßen optischen Positionsmesseinrichtung;
- Figur 8: eine schematisierte Darstellung des Abtaststrahlengangs einer dritten Ausführungsform der erfindungsgemäßen optischen Positionsmesseinrichtung;
- Figur 9: eine schematisierte Darstellung des Abtaststrahlengangs einer vierten Ausführungsform der erfindungsgemäßen optischen Positionsmesseinrichtung;
- Figur 10: eine schematisierte Teil-Darstellung eines Rastersondenmikroskops, in dem die erfindungsgemäße optische Positionsmesseinrichtung eingesetzt wird.

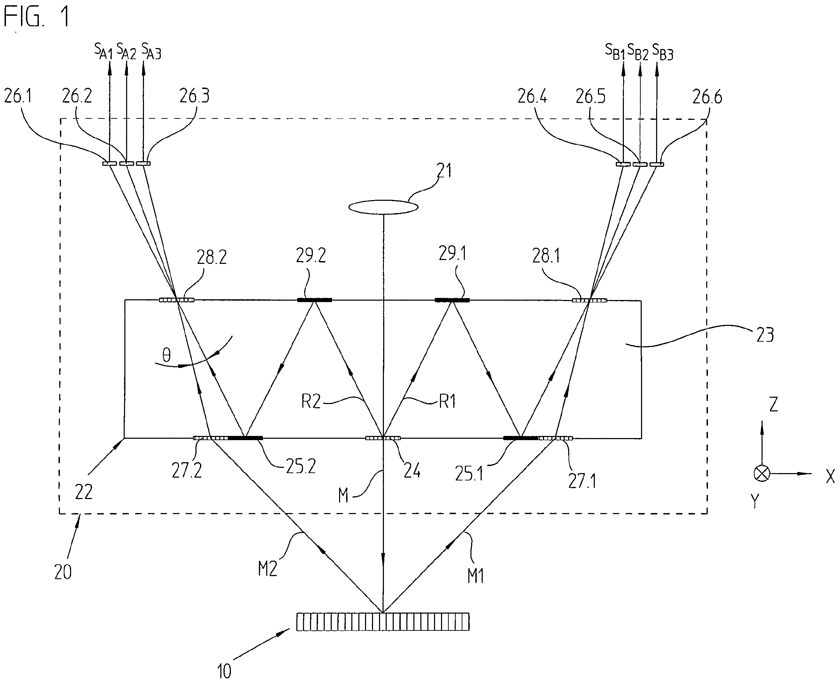

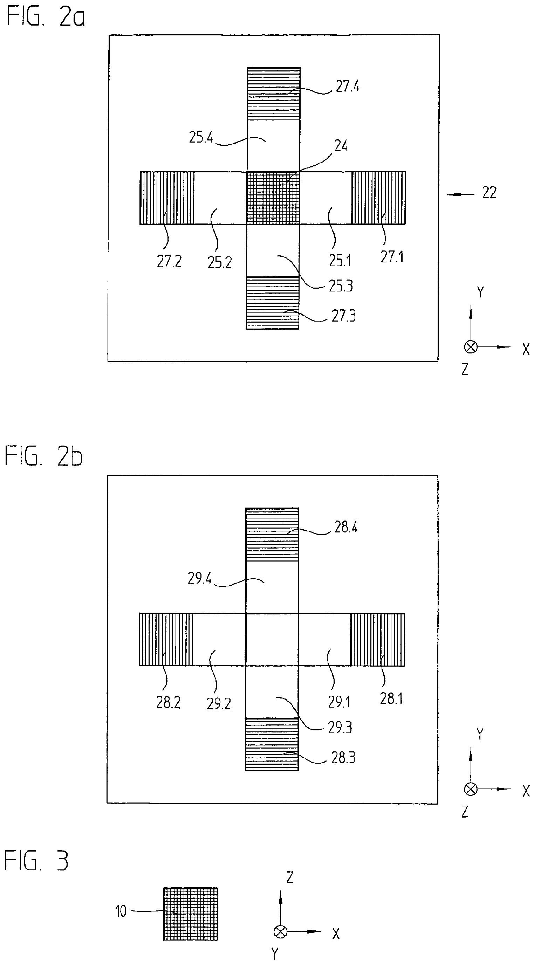

Anhand der Figuren 1, 2a, 2b, 3 und 4 werden nachfolgend anhand eines ersten Ausführungsbeispiels einer erfindungsgemäßen optischen Positionsmesseinrichtung die grundsätzlichen Prinzipien der vorliegenden Erfindung erläutert. Figur 1 zeigt hierbei in stark schematisierter Form den Abtaststrahlengang derselben, Figur 2a und 2b je eine Ansicht der Ober- und Unterseite der verwendeten Abtastplatte in der Abtasteinheit sowie Figur 3 eine Draufsicht auf die abgetastete Reflexions-Maßverkörperung. Die verschiedenen Darstellungen sind hierbei nicht maßstäblich korrekt wiedergegeben, sondern dienen lediglich zur prinzipiellen Veranschaulichung der Strahlengänge.

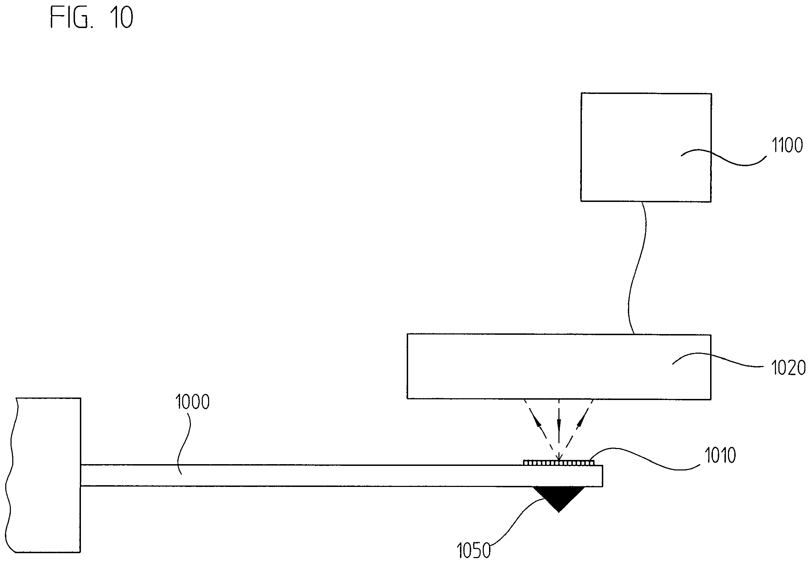

Die erfindungsgemäße optische Positionsmesseinrichtung besteht aus einer Abtasteinheit 20 sowie einer relativ hierzu beweglichen Reflexions-Maßverkörperung 10. Abtasteinheit 20 und Reflexions-Maßverkörperung 10 sind mit zwei zueinander beweglichen - nicht dargestellten - Objekten verbunden, deren Relativposition zu erfassen ist. Bei den Objekten kann es sich beispielsweise um zueinander bewegliche Maschinenteile handeln, deren Relativpositionierung über eine Folgeelektronik auf Basis der erzeugten Positions- bzw. Abtastsignale S_{A1}, S_{A2}, S_{A3}, S_{B1}, S_{B2}, S_{B3} erfolgt. Eine weitere konkrete Einsatzmöglichkeit der erfindungsgemäßen Positionsmesseinrichtung wird in der nachfolgenden Beschreibung anhand von Figur 10 erläutert.

Im dargestellten Ausführungsbeispiel umfasst die Abtasteinheit 20 eine Lichtquelle 21, eine Abtastplatte 22 mit verschiedenen optisch wirksamen Elementen auf der Vorder- und Rückseite eines transparenten Trägerelements 23 sowie mindestens eine Detektoranordnung, bestehend aus mehreren Detektorelementen 26.1 - 26.6. Die Funktionen der einzelnen Komponenten der Abtasteinheit 20 werden im Verlauf der weiteren detaillierten Beschreibung des Abtaststrahlengangs noch näher erläutert.

Die Reflexions-Maßverkörperung 10 ist in diesem Beispiel als zweidimensionale Maßverkörperung in Form eines Kreuzgitters ausgebildet, von dem eine Draufsicht in Figur 3 dargestellt ist. Das Kreuzgitter besteht demzufolge aus einer Überlagerung einer eindimensionalen Maßverkörperung in der angegebenen x-Richtung und einer eindimensionalen Maßverkörperung in der hierzu senkrechten y-Richtung. In einer möglichen Ausführungsform besitzt das Kreuzgitter in den beiden Erstreckungsrichtungen x, y die gleiche Teilungsperiode TP_{M} und wird in einer möglichen Ausführungsform gemäß TP_{M} = 0.6 µm gewählt.

In der erfindungsgemäßen optischen Positionsmesseinrichtung resultieren die relativen Positionsinformationen bzgl. der Relativposition der Reflexions-Maßverkörperung 10 und der Abtasteinheit 20 entlang mindestens einer lateralen (x, y) und einer vertikalen (z) Verschiebungsrichtung aus der interferierenden Überlagerung mindestens zweier Mess-Teilstrahlenbündel mit mindestens einem Referenz-Teilstrahlenbündel. Jegliche Veränderung der Relativposition der Reflexions-Maßverkörperung 10 und der Abtasteinheit 20 hat zur Folge, dass in den interferierenden Strahlenbündeln Phasenunterschiede resultieren, die dann mehrere phasenverschobene, periodisch modulierte Abtastsignale S_{A1}, S_{A2}, S_{A3}, S_{B1}, S_{B2}, S_{B3} erzeugen, die über mehrere Detektorelemente 26.1 - 26.6 einer Detektoranordnung erfassbar sind.

Nachfolgend werden nunmehr der konkrete Abtaststrahlengang des ersten Ausführungsbeispiels einer erfindungsgemäßen optischen Positionsmesseinrichtung sowie weitere Details dieser Ausführungsform erläutert.

Die in diesem Beispiel der Abtasteinheit 20 zugeordnete Lichtquelle 21 kann etwa als Laserdiode ausgebildet sein und Strahlung mit einer Wellenlänge von 670nm emittieren; alternativ hierzu käme beispielsweise auch eine sog. VCSEL-Lichtquelle (Vertical Cavity Surface Emitting Laser) in Betracht, die z.B. Strahlung mit der Wellenlänge 850nm liefert. Das von der Lichtquelle 21 emittierte Strahlenbündel wird in der Abtasteinheit 20 zunächst über eine nicht dargestellte Kollimationsoptik kollimiert, d.h. parallel-gerichtet, und dann einem Aufspaltelement in Form eines Aufspalt-Gitters 24 zugeführt. Das Aufspalt-Gitter 24 ist in diesem Beispiel an der der Reflexions-Maßverkörperung 10 zugewandten Seite des Trägerelements 23 angeordnet. Diese Seite wird nachfolgend als Vorderseite des Trägerelements 23 bzw. der Abtastplatte 22 bezeichnet. Über das Aufspalt-Gitter 24 wird das darauf einfallende Strahlenbündel zunächst in ein Mess-Strahlenbündel M sowie in vier Referenz-Teilstrahlenbündel aufgespalten. In der Darstellung der Figur 1 sind hierbei lediglich die beiden in der xz-Ebene aufgespaltenen Teilstrahlenbündel R1, R2 erkennbar; die beiden weiteren Referenz-Teilstrahlenbündel werden in der hierzu senkrechten yz-Ebene aufgespalten und sind demzufolge in Figur 1 nicht sichtbar. Das Aufspalt-Gitter 24 ist im dargestellten Beispiel als transmittierendes Beugungsgitter in Form eines zweidimensionalen Kreuzgitters ausgebildet, wie dies aus der Draufsicht auf die Vorderseite der Abtastplatte 22 in Figur 2a ersichtlich ist. Die erfindungsgemäße Ausbildung des Aufspaltelements als Aufspaltgitter bietet gegenüber der Verwendung von Strahlteilerwürfeln erhebliche fertigungstechnische Vorteile und ermöglicht auch eine deutlich kompaktere Bauweise der Abtasteinheit.

Das Mess-Teilstrahlenbündel M propagiert anschließend in Richtung der Reflexions-Maßverkörperung 10, beaufschlagt diese und wird dort in vier Mess-Teilstrahlenbündel aufgespalten. In der Darstellung der Figur 1 sind hierbei wiederum lediglich die zwei in der xz-Ebene aufgespaltenen Mess-Teilstrahlenbündel M1, M2 erkennbar, die beiden anderen Mess-Teilstrahlenbündel werden in der hierzu senkrechten yz-Ebene aufgespalten und sind in Figur 1 nicht dargestellt.

Die Reflexions-Maßverkörperung 10 ist als reflektierendes Beugungsgitter in Form eines zweidimensionalen Kreuzgitters ausgebildet. Die aufgespaltenen Mess-Teilstrahlenbündel M1, M2 werden von der Reflexions-Maßverkörperung 10 in Richtung Abtasteinheit 20 zurückreflektiert. Dort gelangen die Mess-Teilstrahlenbündel auf vier weitere Gitter, die als transmittive Ablenk-Gitter 27.1 - 27.4 in Form von Lineargittern ausgebildet und auf der Vorderseite der Abtastplatte 22 angeordnet sind. Über die Ablenk-Gitter 27.1 - 27.4 erfolgt jeweils eine Ablenkung der diese Gitter 27.1 - 27.4 durchlaufenden Mess-Teilstrahlenbündel M1, M2 hin zu einer Achse, die ausgehend vom Auftreffpunkt auf die Ablenk-Gitter 27.1 - 27.4 senkrecht auf die Gitterebene orientiert ist. Nach der erfolgten Ablenkung propagieren die Mess-Teilstrahlenbündel M1, M2 durch das Trägerelement 23 jeweils zu weiteren Gittern, die als transmittive Vereinigungs-Gittern 28.1 - 28.4 ausgebildet und auf der Rückseite des Trägerelements 23 angeordnet sind. Als Rückseite wird hierbei diejenige Seite des Trägerelements 23 bzw. der Abtastplatte 22 bezeichnet, die abgewandt zur Reflexions-Maßverkörperung 10 orientiert ist. An den Vereinigungs-Gittern 28.1 - 28.4 werden die vier Mess-Teilstrahlenbündel M1, M2 mit den am Aufspalt-Gitter 24 aufgespaltenen, vier Referenz-Teilstrahlenbündeln R1, R2 zur interferierenden Überlagerung gebracht.

Die vier Referenz-Teilstrahlenbündel R1, R2 propagieren in der erfindungsgemäßen optischen Positionsmesseinrichtung nach der Aufspaltung am Aufspalt-Gitter 24 ausschließlich in der Abtastplatte 22 bzw. im Trägerelement 23. Dabei werden sie über die Reflektorelemente 29.1 - 29.4 auf der Rückseite des Trägerelements 23 ein erstes Mal reflektiert und über die Reflektorelemente 25.1 - 25.4 auf der Vorderseite des Trägerelements 23 ein zweites Mal reflektiert, bevor sie mit den Mess-Teilstrahlenbündeln M1, M2 an den Vereinigungs-Gittern 28.1 - 28.4 vereinigt werden. Die Referenz-Teilstrahlenbündel R1, R2 beaufschlagen demzufolge erfindungsgemäß nicht die Reflexions-Maßverkörperung 10, sondern verlaufen vollständig in der Abtasteinheit 20 bzw. in der Abtastplatte 22. Aufgrund dieser Strahlengangführung der Referenz-Teilstrahlenbündel ist eine besonders kompakte, Bauraum sparende Ausführung der erfindungsgemäßen optischen Positionsmesseinrichtung möglich.

An den vier Vereinigungs-Gittern 28.1 - 28.4 interferieren jeweils die dort auftreffenden vier Mess-Teilstrahlenbündel M1, M2 mit den vier Referenz-Teilstrahlenbündeln R1, R2. Über die Vereinigungsgitter 28.1 - 28.4 erfolgt jeweils noch eine Aufspaltung der interferierenden Teilstrahlenbündel in drei Paare interferierender Teilstrahlenbündel, die nach jedem Vereinigungs-Gitter 28.1 - 28.4 in drei unterschiedlichen Raumrichtungen propagieren. Den vier Vereinigungs-Gittern 28.1 - 28.4 ist jeweils eine Detektoranordnung mit je drei Detektorelementen 26.1 - 26.6 in den entsprechenden Raumrichtungen nachgeordnet, über die die verschiebungsabhängigen Abtastsignale S_{A1}, S_{A2}, S_{A3}, S_{B1}, S_{B2}, S_{B3} erfasst werden. An den je drei Detektorelementen 26.1 - 26.3 bzw. 26.4 - 26.6 einer Detektoranordnung liegen jeweils periodische, verschiebungsabhängige Abtastsignale S_{A1}, S_{A2}, S_{A3}, S_{B1}, S_{B2}, S_{B3} an, die einen Phasenversatz von 120° zueinander aufweisen. Der resultierende Phasenversatz zwischen den verschiebungsabhängigen Abtastsignalen S_{A1}, S_{A2}, S_{A3}, S_{B1}, S_{B2}, S_{B3} wird im übrigen durch die Ausgestaltung des jeweiligen Vereinigungs-Gitters 28.1 - 28.4 definiert eingestellt. Hierzu werden die Gitter-Parameter der Vereinigungs-Gitter 28.1 - 28.4, wie z.B. Teilungsperiode, Phasenhub, Teilungsverhältnis etc., geeignet gewählt. In Figur 1 sind lediglich zwei der vier Detektoranordnungen dieses Ausführungsbeispiels dargestellt.

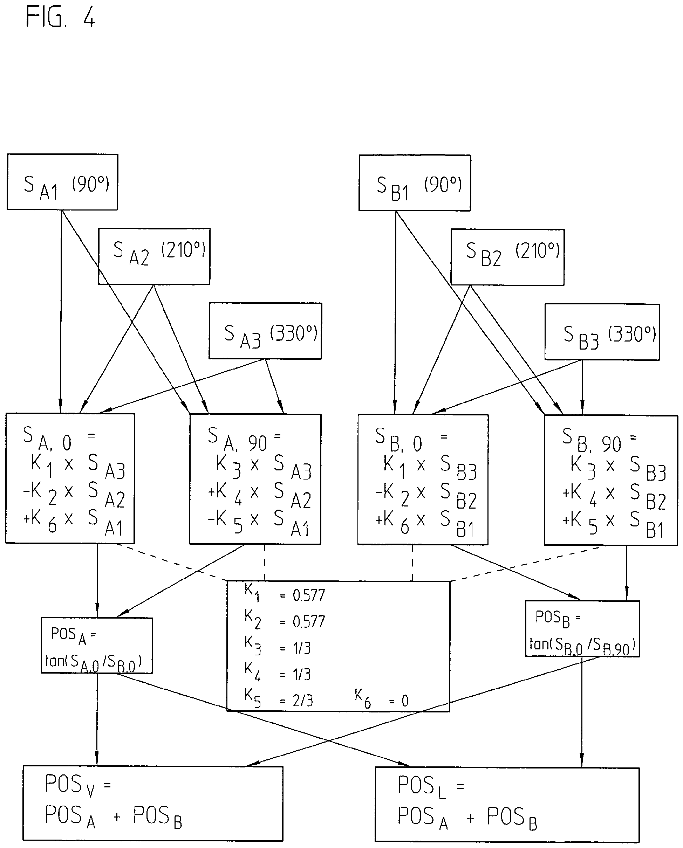

Über die dergestalt erzeugten Abtastsignale S_{A1}, S_{A2}, S_{A3}, S_{B1}, S_{B2}, S_{B3} lassen sich nunmehr direkt Relativbewegungen der beiden zueinander beweglichen Objekte sowohl in einer lateralen als auch entlang einer vertikalen Verschiebungsrichtung erfassen, was nachfolgend anhand von Figur 4 noch detaillierter erläutert wird.

Wie bereits oben angedeutet ist für die erfindungsgemäße optische Positionsmesseinrichtung maßgeblich, dass ein oder mehrere Referenz-Teilstrahlenbündel R1, R2 ausschließlich in der Abtasteinheit 20 propagieren und insbesondere nicht die Reflexions-Maßverkörperung 10 beaufschlagen. Als besonders vorteilhaft erweist sich hierbei, wenn sichergestellt wird, dass die jeweiligen Referenz-Teilstrahlenbündel R1, R2 bis zur Überlagerung mit dem jeweiligen Mess-Teilstrahlenbündel M1, M2 am entsprechenden Vereinigungsgitter 28.1 - 28.4 einen optischen Weg zurückgelegt haben, der in etwa dem optischen Weg entspricht, den bis zu diesem Punkt auch die jeweiligen Mess-Teilstrahlenbündel M1, M2 zurückgelegt haben. Dies ist insofern vorteilhaft, da darüber eine gute Signalmodulation auch bei geringer Kohärenzlänge resultiert.

Gleiche optische Weglängen der Referenz-Teilstrahlenbündel R1, R2 und der Mess-Teilstrahlenbündel M1, M2 werden im dargestellten Ausführungsbeispiel i.w. durch die Strahlengangführung der Referenz-Teilstrahlenbündel R1, R2 im transparenten Trägerelement 23 der Abtastplatte 22 sichergestellt. Insbesondere erfolgt dies durch die geeignete Wahl der Dicke des Trägerelements 23, dessen Brechungsindex sowie die entsprechende Wahl der Reflexionen an den verschiedenen Reflektorelementen 25.1 - 25.4, 29.1 - 29.4. Selbstverständlich können zu diesem Zweck alternativ zum dargestellten Beispiel je nach Abtastkonfiguration auch mehr oder weniger Reflektorelemente in der Abtastplatte 22 an geeigneten Stellen vorgesehen werden oder eine andere Dicke des Trägerelements 23 gewählt werden. Ebenso wäre denkbar, z.B. eine weitere Glasplatte im zentralen Bereich der Rückseite des Trägerelements anzuordnen, auf deren Oberseite dann Reflektorelemente angeordnet sind, um auf diese Art und Weise die Strahlengangführung der Referenzteilstrahlenbündel geeignet einzustellen etc..

Als Reflektorelemente 25.1 - 25.4, 29.1 - 29.4 kommen beispielsweise planare Reflektorspiegel in Betracht, die wie im vorliegenden Beispiel an der Vorder- und Rückseite der Abtastplatte 22 angeordnet werden, wobei die reflektierenden Seiten jeweils dem Trägerelement 22 zugewandt sind.

Anhand der schematisierten Blockschalt-Darstellung in Figur 4 sei nachfolgend skizziert, wie Positionsinformationen bezüglich einer lateralen und einer vertikalen Verschiebebewegung der Objekte durch eine geeignete Verarbeitung der Abtastsignale S_{A1}, S_{A2}, S_{A3}, S_{B1}, S_{B2}, S_{B3} gewonnen werden können. Das hierbei erläuterte Vorgehen wird in der Regel durch eine geeignete soft- oder hardwaremäßige Umsetzung realisiert. Die nachfolgende Erläuterung veranschaulicht hierbei lediglich grundsätzlich, wie eine Positionsinformation entlang einer lateralen Verschieberichtung, z.B. entlang der x-Achse, und entlang einer vertikalen Verschieberichtung, z.B. entlang der z-Achse, mit Hilfe der erfindungsgemäßen Positionsmesseinrichtung gewonnen werden können. In diesem Zusammenhang sei im Übrigen auch ausdrücklich auf die bereits eingangs erwähnte DE 10 2005 043 569 A1 der Anmelderin verwiesen.

In einem ersten Verarbeitungsschritt werden gemäß Figur 4 die Abtastsignale S_{A1}, S_{A2}, S_{A3}, S_{B1}. S_{B2}, S_{B3}, die an den beiden Detektoranordnungen mit den Detektorelementen 26.1 - 26.6 resultieren und jeweils um 120° phasenversetzt sind, durch die in Figur 4 angedeutete Multiplikation mit den Koeffizienten k₁ - k₆ in je zwei Signale S_{A,0}, S_{A,90} bzw. S_{B,0}, S_{B,90} umgewandelt. Die erzeugten Signale S_{A,0}, S_{A,90} bzw. S_{B,0}, S_{B,90} besitzen jeweils eine Phasenverschiebung von 90° zueinander. Die verschiedenen Koeffizienten k₁ - k₆ können zu diesem Zweck wie in Figur 4 angegeben gewählt werden. Im folgenden Verarbeitungsschritt erfolgt die Bildung der Positionswerte POS_{A} bzw. POS_{B}, in dem in bekannter Art und Weise der Tangens aus dem Quotienten der vorher generierten Signale S_{A,0}, S_{A,90} bzw. S_{B,0}, S_{B,90} gebildet wird. Die derart erzeugten Positionswerte POS_{A} bzw. POS_{B} sind nunmehr empfindlich bezüglich Verschiebungen entlang der lateralen und der vertikalen Verschieberichtung. Wünschenswert sind jedoch zur Weiterverarbeitung Positionsinformationen, die ausschließlich die Verschiebebewegung entlang einer der beiden Richtungen (x, z) charakterisieren. Im abschließenden Schritt wird deshalb eine Positionsinformation POS_{L} bezüglich einer lateralen Verschiebebewegung durch die Differenzbildung aus den Positionswerten POS_{A} und POS_{B} generiert; eine Positionsinformation POS_{V} bezüglich einer vertikalen Verschiebebewegung wird wie angegeben durch die Summenbildung aus den Positionswerten POS_{A} und POS_{B} erzeugt. Auf diese Art und Weise lassen sich Positionsinformation POS_{V}, POS_{L} erzeugen, die Signalperioden in der Größenordnung der Teilungsperiode TP_{M} der abgetasteten Reflexions-Maßverkörperung 10 besitzen und damit eine hochpräzise direkte Positionsbestimmung ermöglichen. Die dergestalt generierten Positionsinformationen POS_{L} und POS_{V} können dann in einer nachgeordneten Folgeelektronik weiterverarbeitet werden.

Selbstverständlich wäre es hierbei auch möglich, die vollständige Verarbeitung der Abtastsignale S_{A1}, S_{A2}, S_{A3}, S_{B1}, S_{B2}, S_{B3}, wie dies anhand von Figur 4 erläutert wurde, auf Seiten einer Folgeelektronik vorzunehmen.

Alternativ zur dargestellten Variante mit einer einzigen zweidimensionalen Reflexions-Maßverkörperung 10 ist es im Rahmen der vorliegenden desweiteren auch möglich, zwei eindimensionale Lineargitter zu verwenden, die entlang der Raumrichtungen x und y in der Maßverkörperungsebene angeordnet werden. Abtastseitig dient dann pro Raumrichtung x, y eine Abtasteinheit wie sie in der Zeichenebene von Figur 1 veranschaulicht ist, d.h. die jeweilige Abtasteinheit umfasst dann lediglich diejenigen Komponenten, die entlang der dortigen x-Achse vorgesehen sind, wobei das Aufspalt-Gitter 24 dann natürlich auch als eindimensionales Lineargitter ausgebildet sein kann. An den entsprechenden Detektoranordnungen resultieren dann Positionsinformationen bzgl. Verschiebebewegungen in x- und z-Richtung bzw. in y- und z-Richtung, d.h. jeweils bzgl. einer (eindimensionalen) lateralen Verschiebebewegung (x, y) in der Maßverkörperungsebene und in einer hierzu senkrechten, vertikalen Verschieberichtung (z).

Die resultierende Empfindlichkeit der Messung in der vertikalen Verschieberichtung z lässt sich in der erfindungsgemäßen optischen Positionsmesseinrichtung im übrigen durch die geeignete Wahl des Winkels Θ einstellen. Wie in Figur 1 veranschaulicht, gibt der Winkel Θ denjenigen Winkel an, unter dem die Mess-Teilstrahlenbündel M1, M2 und die Referenz-Teilstrahlenbündel R1, R2 in Richtung der Vereinigungs-Gitter 28.1 - 28.4 propagieren. Durch eine entsprechende Strahlengangführung der verschiedenen Teilstrahlenbündel in der Abtasteinheit 20 lässt sich der Winkel Θ geeignet einstellen.

Soll die erfindungsgemäße optische Positionsmesseinrichtung miniaturisiert ausgebildet werden, wie z.B. im Fall des Einsatzes in Verbindung mit einem Rastersondenmikroskop, so steht in der Regel nur eine Reflexions-Maßverkörperung 10 mit räumlich begrenzter Ausdehnung zur Verfügung. Es ist in diesem Fall daher günstig, wenn das Mess-Strahlenbündel M bzw. eine Mess-Teilstrahlenbündel auf einen räumlich begrenzten Bereich der Reflexions-Maßverkörperung 10 fokussiert wird. Typische Spotgrößen des fokussierten Mess-Strahlenbündels M weisen etwa einen Durchmesser in der Größenordnung von 30µm auf. Um dies zu gewährleisten, umfasst die Abtasteinheit 20 in derartigen Ausführungsformen der erfindungsgemäßen optischen Positionsmesseinrichtung eine der Lichtquelle 21 zugeordnete Fokussieroptik, über die die Fokussierung des Mess-Strahlenbündels M bzw. eines Mess-Teilstrahlenbündels auf einen räumlich begrenzten Bereich der Reflexions-Maßverkörperung 10 erfolgt.

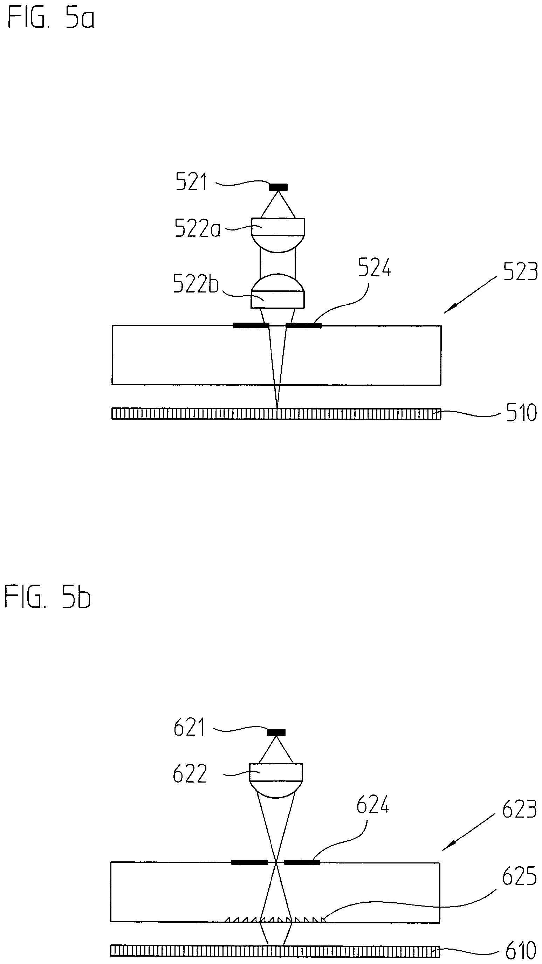

Geeignete Beleuchtungsvarianten für diesen Zweck sind in den Figuren 5a - 5c schematisiert gezeigt, wobei in diesen Figuren lediglich die beleuchtungsrelevanten Komponenten der erfindungsgemäßen optischen Positionsmesseinrichtung dargestellt sind. Die nachfolgend erläuterten Beleuchtungsvarianten können hierbei in Verbindung mit allen beschriebenen Ausführungsbeispielen der erfindungsgemäßen optischen Positionsmesseinrichtung eingesetzt werden.

In der Variante gemäß Figur 5a besteht die der Lichtquelle 521 in der Abtasteinheit vorgeordnete Fokussieroptik aus einer zweiteiligen Kollimatoroptik mit den beiden Kollimatorlinsen 522a, 522b sowie einer auf der Rückseite der Abtastplatte 523 angeordneten Blende 524. Selbstverständlich kann alternativ zur zweiteiligen Kollimatoroptik auch lediglich eine einzige Kollimatorlinse in Verbindung mit einer Blende als Fokussieroptik eingesetzt werden.

Im Beispiel der Figur 5b ist als Fokussieroptik eine Fresnellinse 625 vorgesehen, die auf der Vorderseite der Abtastplatte 623 angeordnet bzw. in diese integriert ausgebildet ist. Ferner ist in dieser Ausführungsform der Beleuchtung eine Kollimatorlinse 622 sowie eine Blende 624 der Lichtquelle 621 vorgeordnet; die Blende 624 ist wiederum auf der Rückseite der Abtastplatte 623 angeordnet.

In den bisher erläuterten Ausführungsbeispielen war jeweils vorgesehen, die Lichtquelle in der Abtasteinheit anzuordnen. Im Rahmen der vorliegenden Erfindung ist es natürlich auch möglich, die Lichtquelle räumlich entfernt von der Abtasteinheit zu platzieren und die emittierte Strahlung der Lichtquelle der Abtasteinheit über einen Lichtleiter oder eine geeignete Freistrahlzuführung zuzuführen. Dies kann sich etwa dann als vorteilhaft erweisen, wenn beengte Einbaubedingungen für die Abtasteinheit vorliegen oder ggf. der thermische Einfluss der Lichtquelle im Umfeld der Abtasteinheit minimiert werden soll.

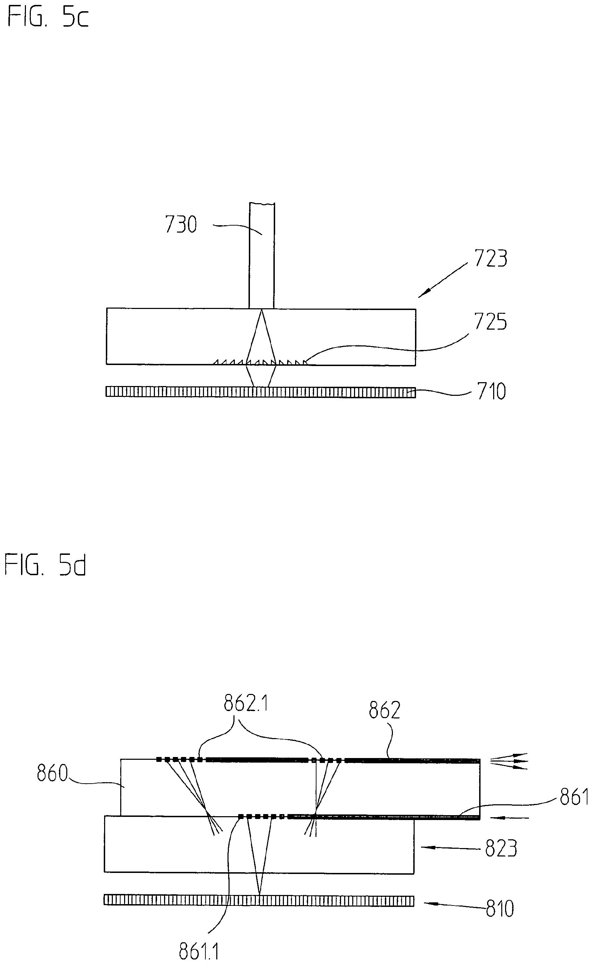

In Figur 5c ist eine Beleuchtungsvariante gezeigt, bei der die von einer - nicht dargestellten - Lichtquelle emittierte Strahlung über einen Lichtleiter 730 der Abtasteinheit bzw. der Abtastplatte 723 zugeführt wird. Als Fokussieroptik ist in diesem Beispiel wiederum eine auf der Vorderseite der Abtastplatte 723 angeordnete Fresnellinse 710 vorgesehen, über die eine Fokussierung des Mess-Strahlenbündels auf einen räumlich begrenzten Bereich der Reflexions-Maßverkörperung 710 erfolgt.

Eine weitere Ausführungsmöglichkeit für eine Beleuchtung mit einer räumlich von der Abtasteinheit entfernten Lichtquelle ist in stark schematisierter Form in Figur 5d gezeigt. Hierbei ist ein auf der Rückseite der Abtastplatte 823 angeordneter Wellenleiter 860 vorgesehen. Dieser umfasst an seiner Unterseite eine Wellenleiterstruktur 861 mit einem Gitter-Auskoppelelement 861.1 sowie auf der Oberseite eine weitere Wellenleiterstruktur 862 mit Gitter-Einkoppelelementen 862.1, über die die interferierenden Teilstrahlenbündel einer - nicht dargestellten - Detektoranordnung zuführbar sind, die wie die - ebenfalls nicht dargestellte - Lichtquelle räumlich entfernt von der Abtasteinheit angeordnet ist. Neben der Lichtquelle kann demzufolge auch die Detektoranordnung bzw. die Detektorelemente derselbigen räumlich entfernt von der eigentlichen Abtasteinheit angeordnet werden und die Zuführung der interferierenden Teilstrahlenbündel über geeignete Lichtleiter erfolgen.

Neben der fokussierten Beleuchtung der Reflexions-Maßverkörperung 10 im Fall einer räumlich sehr begrenzten Ausdehnung derselben, kann als weitere Maßnahme vorgesehen werden, dass eine räumliche Nachführung der Abtasteinheit 20 erfolgt, so dass immer sichergestellt ist, dass das Mess-Strahlenbündel M tatsächlich die Reflexions-Maßverkörperung 10 beaufschlagt. Eine derartige Nachführung kann innerhalb eines begrenzten räumlichen Bereiches beispielsweise mit Hilfe von piezoelektrischen Stellelementen erfolgen.

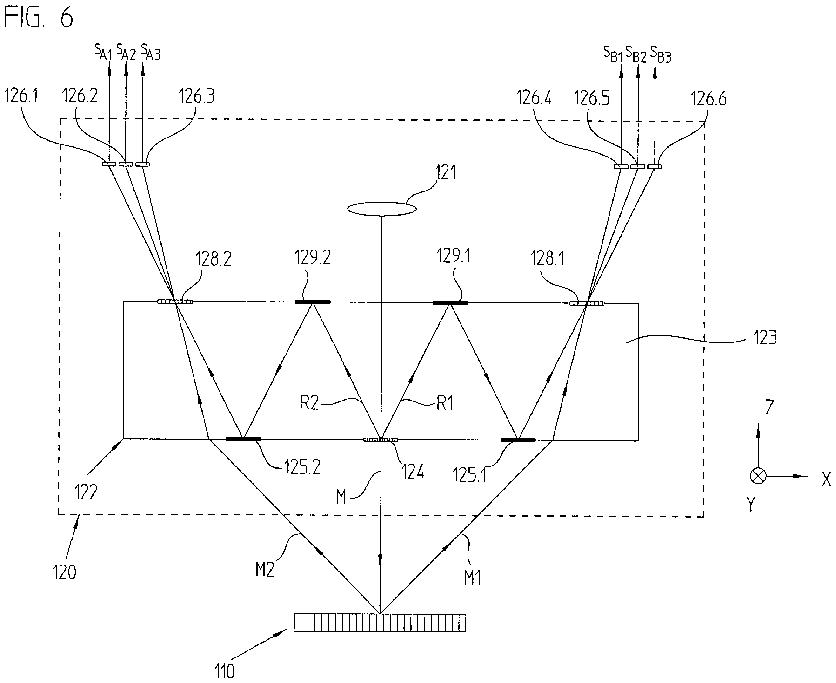

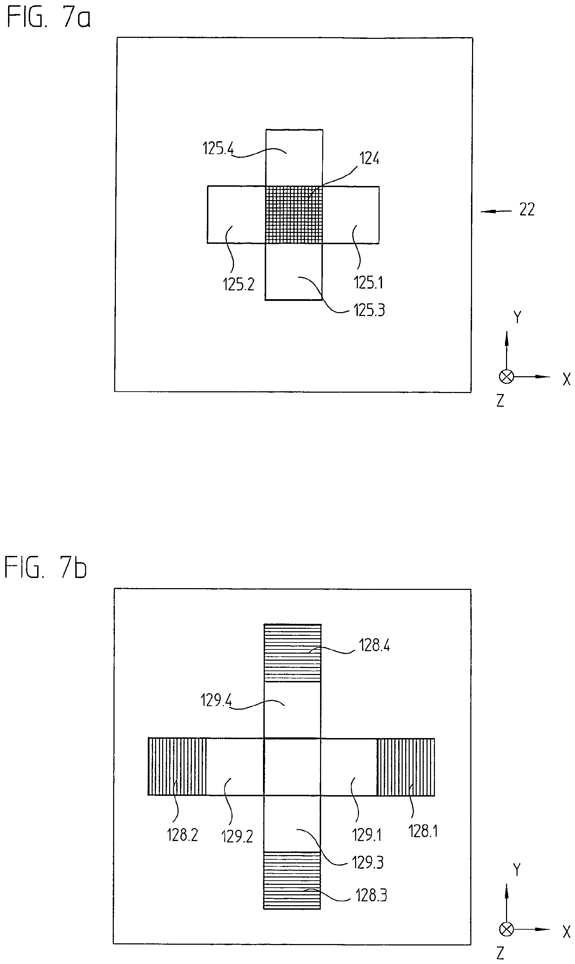

Ein zweites Ausführungsbeispiel der erfindungsgemäßen optischen Positionsmesseinrichtung wird nachfolgend anhand der Figuren 6 sowie 7a und 7b erläutert. Dies zeigen Ansichten der Positionsmesseinrichtung analog zur Darstellung des ersten Ausführungsbeispiels. Zur Vermeidung von Wiederholungen wird sowohl bei der Beschreibung des zweiten Ausführungsbeispiels wie auch der folgenden Ausführungsbeispiele i.w. nur auf die maßgeblichen Unterschiede zum bereits detailliert erläuterten ersten Ausführungsbeispiel eingegangen.

So ist in der zweiten Ausführungsform der erfindungsgemäßen optischen Positionsmesseinrichtung im Unterschied zur ersten Variante vorgesehen, die dort an der Vorderseite der Abtastplatte 22 angeordneten Ablenkgitter 27.1 - 27.4 für die Mess-Teilstrahlenbündel M1, M2 nunmehr wegzulassen. Es entfallen in der zweiten Ausführungsform demzufolge die auf der Abtastplatten-Vorderseite angeordneten Ablenkgitter, was eine vereinfachte Herstellung der Abtastplatte 122 zur Folge hat. Die an dieser Stelle nötige Ablenkung der von der Reflexions-Maßverkörperung 110 herkommenden Mess-Teilstrahlenbündel M1, M2 in Richtung der Senkrechten auf die Abtastplatten-Vorderseite im Auftreffpunkt erfolgt nunmehr durch die geeignete Wahl des Materials für das transparente Trägerelement 123. Durch die resultierende Brechung am Übergang zwischen Luft und dem Trägerelement 123 lässt sich die nötige Ablenkung der Mess-Teilstrahlenbündel M1, M2 an dieser Stelle geeignet einstellen. Darüber hinaus gibt es bei diesem Ausführungsbeispiel keine Änderungen zur vorherigen Variante.

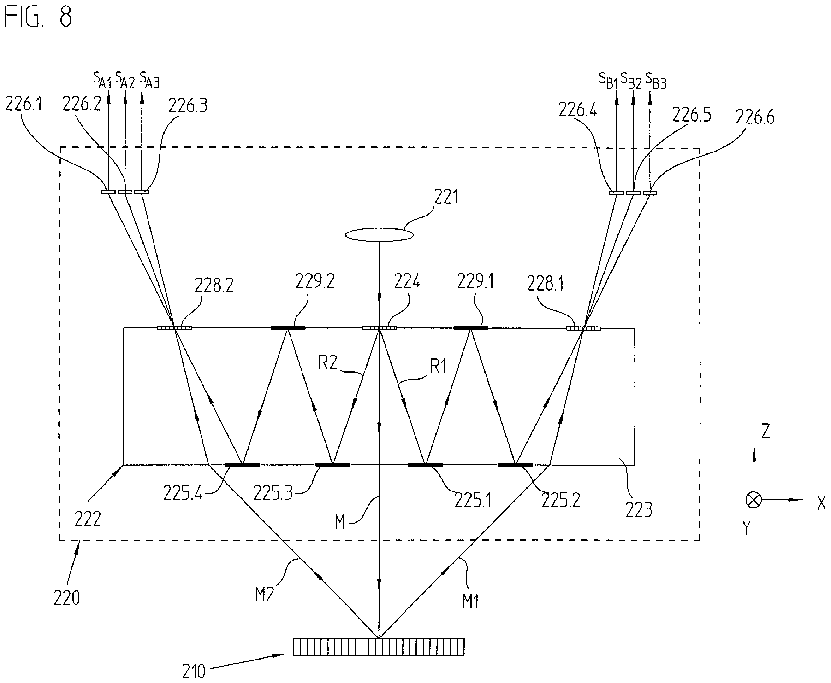

Der Abtaststrahlengang einer dritten Ausführungsform der erfindungsgemäßen optischen Positionsmesseinrichtung ist in Figur 8 analog zu den Strahlengangdarstellungen der vorhergehenden Beispiele gezeigt.

Im Unterschied zu den beiden vorherigen Beispielen ist das Aufspalt-Gitter 224, auf den das von der Lichtquelle 221 emittierte Strahlenbündel auftrifft, nunmehr auf der Rückseite der Abtastplatte 222 in der Abtasteinheit angeordnet. Das Aufspalt-Gitter 224 ist hierbei ebenfalls wieder als transmittives Beugungsgitter ausgebildet. Dieses ist derart ausgestaltet, dass zum einen ein Mess-Strahlenbündel M unabgelenkt durch die Abtastplatte 222 bzw. dessen Trägerelement in Richtung Reflexions-Maßverkörperung 210 propagiert; zum anderen erfolgt über das Aufspalt-Gitter 224 eine Aufspaltung des einfallenden Strahlenbündels in zwei Referenz-Teilstrahlenbündel R1, R2, die unter dem gleichem Winkel am Aufspalt-Gitter 224 gebeugt werden und anschließend erfindungsgemäß bis zur Wiedervereinigung mit den Mess-Teilstrahlenbündeln M1, M2 an den Vereinigungs-Gittern 228.1, 228.2 ausschließlich in der Abtasteinheit 120, respektive im Trägerelement 223 der Abtastplatte 222 propagieren. Hierbei erfolgt wiederum über die verschiedenen Reflektorelemente 225.1 - 225.4, 229.1, 229.2 eine mehrmalige Umlenkung der Referenz-Teilstrahlenbündel, so dass wiederum gewährleistet ist, dass am Vereinigungsort mit den Mess-Teilstrahlenbündeln diese in etwa die gleichen optischen Weglängen zurückgelegt haben wie diese. Ansonsten sei in Bezug auf den Abtaststrahlengang dieser Ausführungsform auf die vorherigen Beispiele verwiesen.

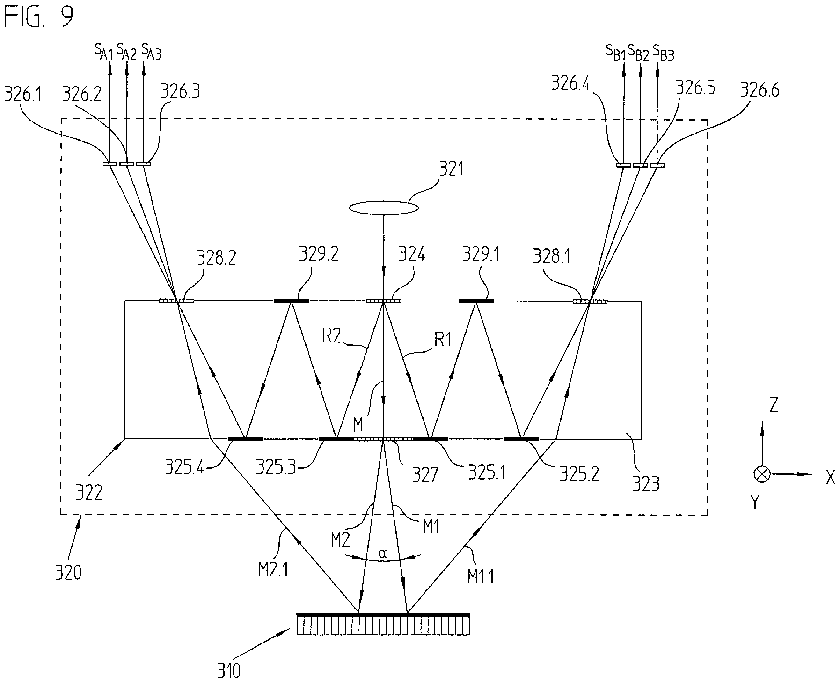

Ein viertes Ausführungsbeispiel einer erfindungsgemäßen optischen Positionsmesseinrichtung sei abschließend anhand der Figur 9 erläutert, die ebenfalls wieder eine Strahlengangdarstellung gemäß den vorhergehenden Beispielen zeigt.

Grundsätzlich basiert dieses Ausführungsbeispiel auf dem vorher erläuterten dritten Ausführungsbeispiel aus der Figur 8. Zusätzlich ist jedoch nunmehr neben dem ersten Aufspalt-Gitter 324 an der Rückseite der Abtastplatte 322 noch ein weiteres, zweites Aufspaltgitter 327 auf der Vorderseite der Abtastplatte 322 angeordnet. Das zweite Aufspalt-Gitter 327 ist wie das erste Aufspalt-Gitter 324 als transmittives Beugungsgitter ausgebildet und wird vom Mess-Strahlenbündel M beaufschlagt, welches das erste Aufspaltgitter 324 unabgelenkt passiert. Am zweiten Aufspalt-Gitter 327 wird das Mess-Strahlenbündel M in vier Mess-Teilstrahlenbündel aufgespalten, die dann in Richtung der Reflexions-Maßverkörperung 310 propagieren. Von den aufgespaltenen Mess-Teilstrahlenbündeln sind in Figur 8 wiederum nur die beiden Mess-Teilstrahlenbündel M1, M2 erkennbar. Auf der Reflexions-Maßverkörperung 310 treffen die Mess-Teilstrahlenbündel M1, M2 auf unterschiedlichen Auftrefforten auf und werden wiederum in Reflexion gebeugt und jeweils nochmals in weitere Teilstrahlenbündel aufgespalten. Von diesen sind in Figur 9 lediglich die beiden Teilstrahlenbündel M1.1, M1.2 in der xz-Ebene dargestellt, die wieder in Richtung der Abtasteinheit 320 propagieren und schließlich an den Vereinigungsgittern 328.1, 328.2 mit den Referenz-Strahlenbündeln R1, R2 interferierend überlagert werden.

Diese Ausführungsform der erfindungsgemäßen optischen Positionsmesseinrichtung erweist sich insbesondere hinsichtlich der resultierenden Lage des neutralen Drehpunkts als vorteilhaft. Hierunter ist derjenige Punkt im Raum zu verstehen, um den eine Verkippung der Reflexions-Maßverkörperung 310 und/oder der Abtasteinheit 320 keinen Einfluss auf die erzeugten positionsabhängigen Abtastsignale S_{A1}, S_{A2}, S_{A3}, S_{B1}, S_{B2}, S_{B3} hat. Eine Verkippung um einen derartigen Punkt hat demzufolge keine fehlerhaften Abtastsignale S_{A1}, S_{A2}, S_{A3}, S_{B1}, S_{B2}, S_{B3} zur Folge. Während in den bislang beschriebenen Ausführungsbeispielen der neutrale Drehpunkt immer in der Ebene der abgetasteten Reflexions-Maßverkörperung lag, ist in der vorliegenden Variante gemäß Figur 9 vorgesehen, dass der neutrale Drehpunkt unterhalb der Reflexions-Maßverkörperung 310 zu liegen kommt. Dieser lässt sich in dieser Variante der erfindungsgemäßen optischen Positionsmesseinrichtung durch die geeignete Wahl des Winkels α einstellen, unter dem die Aufspaltung des Mess-Strahlenbündels M am zweiten Aufspaltgitter 327 erfolgt. Besonders geeignet ist eine derartige Lage des neutralen Drehpunkts, wenn die erfindungsgemäße optische Positionsmesseinrichtung in einer speziellen Applikation zum Einsatz kommt, wie dies in Figur 10 gezeigt ist. Dort ist in stark schematisierter Form ein Teil eines Rastersondenmikroskops dargestellt, insbesondere der Ausleger (Cantilever) desselben, an dessen Unterseite die Rastersondenspitze 1050 angeordnet ist, mit der die Oberfläche einer zu untersuchende Probe rasterförmig abgescannt wird. Zur hochpräzisen Erfassung der räumlichen Position des ausgelenkten Auslegers 1000 in mehreren räumlichen Freiheitsgraden wird nunmehr die erfindungsgemäße optische Positionsmesseinrichtung eingesetzt. Hierzu ist auf der Oberseite des Auslegers 1000 etwa im Bereich der Rastersondenspitze 1050 die Reflexions-Maßverkörperung angeordnet. Darüber befindet sich die stationäre Abtasteinheit 1020, die gemäß einem der oben erläuterten Ausführungsbeispiele ausgebildet ist. Die über die erfindungsgemäße optische Positionsmesseinrichtung erzeugten positionsabhängigen Abtastsignale werden in der ebenfalls nur schematisch angedeuteten Auswerteeinheit 1100 ausgewertet und ggf. weiterverarbeitet. Wenn hierzu die Variante der erfindungsgemäßen optischen Positionsmesseinrichtung eingesetzt wird, die anhand der Figur 9 erläutert wurde, so wird durch die Wahl des Winkels α sichergestellt, dass der neutrale Drehpunkt in der Rastersondenspitze 1050 zu liegen kommt. Auch bei einer Verkippung derselbigen resultieren dann keine Fehler bei der Positionsmessung.

Neben dieser Applikation gibt es selbstverständlich vielfältige weitere Einsatzmöglichkeiten für die erfindungsgemäße optische Positionsmesseinrichtung.

## Patentansprüche

1. Optische Positionsmesseinrichtung zur Erfassung der Relativposition von zwei zueinander beweglichen Objekten, bestehend aus einer Abtasteinheit (20; 120; 220; 320), die mit einem der Objekte verbunden ist und einer Reflexions-Maßverkörperung (10 ; 110 ; 210 ; 310), die mit dem anderen der beiden Objekte verbunden ist, wobei relative Positionsinformationen aus der interferierenden Überlagerung mindestens zweier Mess-Teilstrahlenbündel mit mindestens einem Referenz-Teilstrahlenbündel resultieren, wozu die Abtasteinheit verschiedene optische Komponenten umfasst, die derart angeordnet sind, dass
- ein einfallendes Strahlenbündel in der Abtasteinheit eine Aufspaltung in mindestens ein Mess-Strahlenbündel (M) oder in mindestens zwei Mess-Teilstrahlenbündel (M1, M2) sowie in mindestens ein Referenz-Teilstrahlenbündel (R1, R2) erfährt und
- das mindestens eine Mess-Strahlenbündel oder die mindestens zwei Mess-Teilstrahlenbündel die Reflexions-Maßverkörperung beaufschlagen und dort eine Aufspaltung erfahren, so dass mindestens zwei Mess-Teilstrahlenbündel in Richtung Abtasteinheit zurückreflektiert und jeweils mit einem Referenz-Teilstrahlenbündel zur interferierenden Überlagerung gebracht werden, wobei das mindestens eine Referenz-Teilstrahlenbündel nicht die Reflexions-Maßverkörperung beaufschlagt und
- die überlagerten Mess-Teilstrahlenbündel und Referenz-Teilstrahlenbündel einer Detektoranordnung (26) zugeführt werden, über die verschiebungsabhängige Abtastsignale (S) erfassbar sind, aus denen Positionsinformationen bezüglich mindestens einer lateralen und mindestens einer vertikalen Verschiebungsrichtung der Objekte ableitbar sind,
**dadurch gekennzeichnet,**
- **dass** zur Aufspaltung in mindestens ein Mess-Strahlenbündel (M) oder in mindestens zwei Mess-Teilstrahlenbündel (M1, M2) sowie in mindestens ein Referenz-Teilstrahlenbündel (R1, R2) in der Abtasteinheit (20; 120; 220; 320) mindestens ein Aufspalt-Gitter (24; 124; 224; 324, 327) angeordnet ist und
- in der Abtasteinheit (20; 120; 220; 320) ferner mindestens ein Vereinigungs-Gitter (28.1 - 28.4; 128.1 - 128.4; 228.1, 228.2; 328.1, 328.2) angeordnet ist, das die Mess- und Referenz-Teilstrahlenbündel (M1, M2; M1.1, M2.1; R1, R2) beaufschlagen, bevor die überlagerten Mess-Teilstrahlenbündel (M1, M2; M1.1, M2.1) und Referenz-Teilstrahlenbündel (R1, R2) in Richtung der Detektoranordnung propagieren und
- die Abtasteinheit (20; 120; 220; 320) eine Abtastplatte (22; 122; 222; 322) umfasst, die aus einem transparenten Trägerelement (23; 123; 223; 323) besteht, auf deren der Reflexions-Maßverkörperung (10; 110; 210; 310) zugewandten Vorderseite und/oder auf der der Reflexions-Maßverkörperung (10; 110; 210; 310) abgewandten Rückseite das mindestens eine Aufspalt-Gitter (24; 124; 224; 327) und das mindestens eine Vereinigungs-Gitter (28.1 - 28.4; 128.1 - 128.4; 228.1, 228.2; 328.1, 328.2) planar angeordnet sind, so dass
- nach der Aufspaltung am Aufspaltgitter (24; 124; 224; 324, 327) das mindestens eine Referenz-Teilstrahlenbündel (R1, R2) bis zur Vereinigung mit den Mess-Teilstrahlenbündeln (M1, M2; M1.1, M2.1) an den Vereinigungs-Gittern (28.1 - 28.4; 128.1 - 128.4; 228.1, 228.2; 328.1, 328.2) ausschließlich in der Abtastplatte (22; 122; 222; 322) propagiert.

2. Positionsmesseinrichtung nach Anspruch 1, **dadurch gekennzeichnet, dass** auf der Vorder- und Rückseite der Abtastplatte (22; 122; 222; 322) weitere optisch wirksame Elemente in Form von Reflektorelementen (25.1 - 25.4, 29.1 - 29.4; 125.1 - 125.4, 129.1 - 129.4; 225.1 - 225.4, 229.1, 229.2; 325.1 - 325.4, 329.1, 329.2) und/oder weiterer Gitter (24, 27.1 - 27.4, 28.1 - 28.4; 124, 128.1 - 128.4; 224, 228.1, 228.2; 324, 327, 328.1, 328.2) ausgebildet sind.

3. Positionsmesseinrichtung nach Anspruch 1, **dadurch gekennzeichnet, dass** das Aufspalt-Gitter und/oder das Vereinigungs-Gitter (24, 27.1 - 27.4, 28.1 - 28.4; 124, 128.1 - 128.4; 224, 228.1, 228.2; 324, 327, 328.1, 328.2) als eindimensionales Lineargitter und/oder als zweidimensionales Kreuzgitter ausgebildet ist.

4. Positionsmesseinrichtung nach mindestens einem der vorhergehenden Ansprüche, **dadurch gekennzeichnet, dass** die verschiebungsabhängigen Abtastsignale (S_{A1}, S_{A2}, S_{A3}, S_{B1}, S_{B2}, S_{B3}) einen Phasenversatz zueinander aufweisen, der durch die Ausgestaltung des mindestens einen Vereinigungs-Gitters (28.1 - 28.4; 128.1 - 128.4; 228.1, 228.2; 328.1, 328.2) definiert einstellbar ist.

5. Positionsmesseinrichtung nach mindestens einem der vorhergehenden Ansprüche, **dadurch gekennzeichnet, dass** in der Abtasteinheit (320)
- ein von der Lichtquelle kommendes Strahlenbündel an einem ersten Aufspalt-Gitter (324) eine Aufspaltung in ein Mess-Strahlenbündel (M) und in zwei Referenz-Teilstrahlenbündel (R1, R2) erfährt,
- das Mess-Strahlenbündel (M) dann an einem zweiten Aufspalt-Gitter (327) eine Aufspaltung in ein erstes und zweites Mess-Teilstrahlenbündel (M1, M2) erfährt, und das erste und zweite Mess-Teilstrahlenbündel (M1, M2) jeweils in Richtung der Reflexions-Maßverkörperung (310) propagiert, wo das erste und zweite Mess-Teilstrahlenbündel (M1, M2) an unterschiedlichen Auftrefforten auftreffen und jeweils eine Aufspaltung in weitere Mess-Teilstrahlenbündel (M1.1, M2.1) erfahren, von denen mindestens eines mit einem der Referenz-Teilstrahlenbündel (R1, R2) an mindestens einem Vereinigungs-Gitter (328.1, 328.2) interferierend zur Überlagerung gebracht wird.

6. Positionsmesseinrichtung nach mindestens einem der vorhergehenden Ansprüche, **dadurch gekennzeichnet, dass** die Abtasteinheit (20; 120; 220; 320) eine Fokussieroptik umfasst, über die eine Fokussierung eines Mess-Strahlenbündels oder eines Mess-Teilstrahlenbündels auf einen räumlich begrenzten Bereich der Reflexions-Maßverkörperung (10; 110; 210; 310) erfolgt.

7. Positionsmesseinrichtung nach Anspruch 6, **dadurch gekennzeichnet, dass** die Fokussieroptik eine Kollimatorlinse (522a, 522b; 622) und eine Blende (524; 624) und/oder eine Fresnellinse (625; 725) umfasst.

8. Positionsmesseinrichtung nach mindestens einem der vorhergehenden Ansprüche, **dadurch gekennzeichnet, dass** eine Lichtquelle außerhalb der Abtasteinheit angeordnet ist und zur Zuführung der von der Lichtquelle emittierten Strahlung ein Lichtleiter (730; 860) zwischen der Lichtquelle und der Abtasteinheit angeordnet ist.

9. Positionsmesseinrichtung nach mindestens einem der vorhergehenden Ansprüche, **dadurch gekennzeichnet, dass** die Reflexions-Maßverkörperung (10; 110; 210; 310) mehrere eindimensionale Lineargitter oder ein zweidimensionales Kreuzgitter umfasst, die jeweils aus ein- oder zweidimensionalen, periodischen Anordnungen von Teilbereichen mit unterschiedlichen optischen Reflexionseigenschaften bestehen.

10. Positionsmesseinrichtung nach Anspruch 9, **dadurch gekennzeichnet, dass**
- die Reflexions-Maßverkörperung (10; 110; 210; 310) als zweidimensionales Kreuzgitter ausgebildet ist, an dem eine Aufspaltung des auftreffenden Mess-Strahlenbündels in vier Mess-Teilstrahlenbündel (M1, M2) resultiert, die eine Rückreflexion in Richtung der Abtasteinheit (20; 120; 220; 320) erfahren,
- die Abtasteinheit (20; 120; 220; 320) als Aufspalt-Gitter (24; 124; 224; 324) ein zweidimensionales Kreuzgitter umfasst, an dem eine Aufspaltung des einfallenden Strahlenbündels in vier Referenz-Teilstrahlenbündel (R1, R2) erfolgt und
- die Abtasteinheit (20; 120; 220; 320) vier eindimensionale Lineargitter als Vereinigungs-Gitter (28.1 - 28.4; 128.1 - 128.4; 228.1, 228.2; 328.1, 328.4) umfasst, welche die Mess- und Referenz-Teilstrahlenbündel (M1, M2, R1, R2) beaufschlagen und
- die Abtasteinheit (20; 120; 220; 320) vier Detektoranordnungen mit jeweils mehreren Detektorelementen (26.1 - 26.6; 126.1 - 126.6; 226.1 - 226.6; 326.1 - 326.6) umfasst, über die jeweils verschiebungsabhängige, phasenverschobene Abtastsignale (S_{A1}, S_{A2}, S_{A3}, S_{B1}, S_{B2}, S_{B3}) erfassbar sind.

11. Positionsmesseinrichtung nach Anspruch 10, **dadurch gekennzeichnet, dass** die Reflexions-Maßverkörperung zwei eindimensionale Lineargitter umfasst, die in der Maßverkörperungsebene senkrecht zueinander angeordnet sind.

12. Positionsmesseinrichtung nach mindestens einem der vorhergehenden Ansprüche, **dadurch gekennzeichnet, dass** ein oder mehrere Referenz-Teilstrahlenbündel (R1, R2) bis zur Überlagerung mit dem jeweiligen Mess-Teilstrahlenbündel (M1, M2) ausschließlich in der Abtasteinheit (20; 120; 220; 320) propagieren und in der Abtasteinheit (20; 120; 220; 320) bis zur Überlagerung mit dem jeweiligen Mess-Teilstrahlenbündel (M1, M2) einen optischen Weg zurücklegen, der etwa dem bis zur Überlagerung zurückgelegten optischen Weg des jeweiligen Mess-Teilstrahlenbündels (M1, M2) entspricht.

13. Verwendung einer Positionsmesseinrichtung nach mindestens einem der vorhergehenden Ansprüche in einem Rastersondenmikroskop, wobei mittels der Positionsmesseinrichtung die räumliche Auslenkung eines Auslegers (1000) bestimmbar ist, an dessen Unterseite eine Rastersondenspitze (1050) und auf dessen Oberseite die Reflexions-Maßverkörperung (1010) angeordnet ist.

## Claims

1. Optical position measuring device for acquiring the relative position of two objects movable in relation to one another, consisting of a scanning unit (20; 120; 220; 320), which is connected to one of the objects, and a reflection measuring standard (10; 110; 210; 310), which is connected to the other of the two objects, wherein items of relative position information result from the interfering superposition of at least two measuring partial beams with at least one reference partial beam, for which purpose the scanning unit comprises various optical components, which are arranged such that
- an incident beam experiences a splitting into at least one measuring beam (M) or into at least two measuring partial beams (M1, M2) and into at least one reference partial beam (R1, R2) in the scanning unit and
- the at least one measuring beam or the at least two measuring partial beams are applied to the reflection measuring standard and experience splitting therein, so that at least two measuring partial beams are reflected back in the direction of the scanning unit and are each brought into interfering superposition with a reference partial beam, wherein the at least one reference partial beam is not applied to the reflection measuring standard, and
- the superimposed measuring partial beams and reference partial beams are supplied to a detector arrangement (26), via which displacement-dependent scanning signals (S) can be acquired, from which items of position information with respect to at least one lateral and at least one vertical displacement of the objects are derivable,
**characterized in that**
- at least one splitting grating (24; 124; 224; 324, 327) is arranged in the scanning unit (20; 120; 220; 320) for the splitting into at least one measuring beam (M) or into at least two measuring partial beams (M1, M2) and into at least one reference partial beam (R1, R2) and
- furthermore at least one unifying grating (28.1 - 28.4; 128.1 - 128.4; 228.1, 228.2; 328.1, 328.2) is arranged in the scanning unit (20; 120; 220; 320), to which the measuring and reference partial beams (M1, M2; M1.1, M2.1; R1, R2) are applied before the superimposed measuring partial beams (M1, M2; M1.1, M2.1) and reference partial beams (R1, R2) propagate in the direction of the detector arrangement and
- the scanning unit (20; 120; 220; 320) comprises a scanning plate (22; 122; 222; 322) which consists of a transparent carrier element (23; 123; 223; 323) on the front side of which facing toward the reflection measuring standard (10; 110; 210; 310) and/or on the rear side facing away from the reflection measuring standard (10; 110; 210; 310) the at least one splitting grating (24; 124; 224; 327) and the at least one unifying grating (28.1 - 28.4; 128.1 - 128.4; 228.1, 228.2; 328.1, 328.2) are arranged in a planar manner, so that
- after the splitting on the splitting grating (24; 124; 224; 324, 327), the at least one reference partial beam (R1, R2) exclusively propagates in the scanning plate (22; 122; 222; 322) up to the unification with the measuring partial beams (M1, M2; M1.1, M2.1) on the unifying gratings (28.1 - 28.4; 128.1 - 128.4; 228.1, 228.2; 328.1, 328.2).

2. Position measuring device according to Claim 1, **characterized in that** further optically active elements in the form of reflector elements (25.1 - 25.4, 29.1 - 29.4; 125.1- 125.4, 129.1- 129.4; 225.1 - 225.4, 229.1, 229.2; 325.1 - 325.4, 329.1, 329.2) and/or further gratings (24, 27.1 - 27.4, 28.1 - 28.4; 124, 128.1 - 128.4; 224, 228.1, 228.2; 324, 327, 328.1, 328.2) are formed on the front and rear sides of the scanning plate (22; 122; 222; 322).

3. Position measuring device according to Claim 1, **characterized in that** the splitting grating and/or the unifying grating (24, 27.1 - 27.4, 28.1 - 28.4; 124, 128.1 - 128.4; 224, 228.1, 228.2; 324, 327, 328.1, 328.2) is/are formed as a one-dimensional linear grating and/or as a two-dimensional cross grating.

4. Position measuring device according to at least one of the preceding claims, **characterized in that** the displacement-dependent scanning signals (S_{A1}, S_{A2}, S_{A3}, S_{B1}, S_{B2}, S_{B3}) have a phase offset in relation to one another, which is settable in a defined manner by the design of the at least one unifying grating (28.1 - 28.4; 128.1 - 128.4; 228.1, 228.2; 328.1, 328.2).

5. Position measuring device according to at least one of the preceding claims, **characterized in that**, in the scanning unit (320)
- a beam coming from the light source experiences splitting into a measuring beam (M) and into two reference partial beams (R1, R2) on a first splitting grating (324),
- the measuring beam (M) then experiences a splitting into a first and second measuring partial beam (M1, M2) on a second splitting grating (327), and the first and second measuring partial beams (M1, M2) each propagate in the direction of the reflection measuring standard (310), where the first and second measuring partial beams (M1, M2) are incident at different incidence locations and each experience a splitting into further measuring partial beams (M1.1, M2.1), each of which is brought interfering superposition with at least one of the reference partial beams (R1, R2) on at least one unifying grating (328.1, 328.2).

6. Position measuring device according to at least one of the preceding claims, **characterized in that** the scanning unit (20; 120; 220; 320) comprises a focusing optical unit, via which focusing of a measuring beam or a measuring partial beam is performed on a spatially limited region of the reflection measuring standard (10; 110; 210; 310).

7. Position measuring device according to Claim 6, **characterized in that** the focusing optical unit comprises a collimator lens (522a, 522b; 622) and an aperture (524; 624) and/or a Fresnel lens (625; 725).

8. Position measuring device according to at least one of the preceding claims, **characterized in that** a light source is arranged outside the scanning unit and an optical waveguide (730; 860) is arranged between the light source and the scanning unit to supply the radiation emitted by the light source.

9. Position measuring device according to at least one of the preceding claims, **characterized in that** the reflection measuring standard (10; 110; 210; 310) comprises multiple one-dimensional linear gratings or one two-dimensional cross grating, which each consist of one-dimensional or two-dimensional periodic arrangements of subregions having different optical reflection properties.

10. Position measuring device according to Claim 9, **characterized in that**
- the reflection measuring standard (10; 110; 210; 310) is formed as a two-dimensional cross grating, on which splitting of the incident measuring beam into four measuring partial beams (M1, M2) results, which experience a reflection back in the direction of the scanning unit (20; 120; 220; 320),
- the scanning unit (20; 120; 220; 320) comprises a two-dimensional cross grating as the splitting grating (24; 124; 224; 324), on which splitting of the incident beam into four reference partial beams (R1, R2) occurs, and
- the scanning unit (20; 120; 220; 320) comprises four one-dimensional linear gratings as unifying gratings (28.1 - 28.4; 128.1 - 128.4; 228.1, 228.2; 328.1, 328.4), to which the measuring and reference partial beams (M1, M2, R1, R2) are applied, and
- the scanning unit (20; 120; 220; 320) comprises four detector arrangements each having multiple detector elements (26.1 - 26.6; 126.1 - 126.6; 226.1 - 226.6; 326.1 - 326.6), via each of which displacement-dependent, phase-shifted scanning signals (S_{A1}, S_{A2}, S_{A3}, S_{B1}, S_{B2}, S_{B3}) can be acquired.

11. Position measuring device according to Claim 10, **characterized in that** the reflection measuring standard comprises two one-dimensional linear gratings, which are arranged perpendicularly in relation to one another in the measuring standard plane.

12. Position measuring device according to at least one of the preceding claims, **characterized in that** one or more reference partial beams (R1, R2) exclusively propagate in the scanning unit (20; 120; 220; 320) up to the superposition with the respective measuring partial beam (M1, M2) and cover an optical path in the scanning unit (20; 120; 220; 320) up to the superposition with the respective measuring partial beam (M1, M2) which approximately corresponds to the optical path covered by the respective measuring partial beam (M1, M2) up to the superposition.

13. Use of a position measuring device according to at least one of the preceding claims in a scanning probe microscope, wherein the spatial deflection of a cantilever (1000), on the lower side of which a scanning probe tip (1050) is arranged and on the upper side of which the reflection measuring standard (1010) is arranged, is determinable by means of the position measuring device.

## Revendications

1. Dispositif optique de mesure de position pour 1a détection de la position relative de deux objets mobiles l'un par rapport à l'autre, constitué d'une unité de balayage (20 ; 120 ; 220 ; 320), qui est reliée à l'un des objets et d'une mesure matérialisée de réflexion (10 ; 110 ; 210 ; 310), qui est reliée à l'autre des deux objets, dans lequel des informations de position relatives résultent d'une superposition à des fins d'interférence d'au moins deux faisceaux partiels de mesure avec au moins un faisceau partiel de référence, l'unité de balayage comprenant à cet effet différents composants optiques qui sont agencés de manière à ce que
- un faisceau incident dans l'unité de balayage subit une séparation en au moins un faisceau de mesure (M) ou en au moins deux faisceaux partiels de mesure (M1, M2) et en au moins un faisceau partiel de référence (R1, R2) et
- l'au moins un faisceau de mesure ou les au moins deux faisceaux partiels de mesure sont incidents sur la mesure matérialisée de réflexion et y subissent une séparation, de manière à ce qu'au moins deux faisceaux partiels de mesure soient rétroréfléchis dans la direction de l'unité de balayage et soient respectivement amenés à être superposés à des fins d'interférence avec un faisceau partiel de référence, dans lequel l'au moins un faisceau partiel de référence n'est pas incident sur la mesure matérialisée de réflexion et
- les faisceaux partiels de mesure et de référence superposés sont délivrés à un système détecteur (26), par l'intermédiaire duquel il est possible de détecter des signaux de balayage dépendants du décalage (S) dont il est possible de déduire des informations de position par rapport à au moins une direction de décalage latérale et à au moins une direction de décalage verticale des objets,
**caractérisé en ce que**,
- pour la séparation en au moins un faisceau de mesure (M) ou en au moins deux faisceaux partiels de mesure (M1, M2) et en au moins un faisceau partiel de référence (R1, R2), au moins un réseau de séparation (24 ; 124 ; 224 ; 324, 327) est disposé dans l'unité de balayage (20 ; 120 ; 220 ; 320) et
- au moins un réseau de fusionnement (28.1 - 28.4 ; 128.1 - 128.4 ; 228.1, 228.2 ; 328.1, 328.2) est en outre disposé dans l'unité de balayage (20 ; 120 ; 220 ; 320), sur lequel sont incidents les faisceaux partiels de mesure et de référence (M1, M2 ; M1.1, M2.1 ; R1, R2), avant que les faisceaux partiels de mesure (M1, M2 ; M1.1, M2.1) et les faisceaux partiels de référence (R1, R2) superposés se propagent dans la direction du système détecteur et
- l'unité de balayage (20 ; 120 ; 220 ; 320) comprend une plaque de balayage (22 ; 122 ; 222 ; 322) qui est constituée d'un élément de support transparent (23 ; 123 ; 223 ; 323), ayant une face avant tournée vers la mesure matérialisée de réflexion (10 ; 110 ; 210 ; 310) et/ou ayant une face arrière tournée à l'opposé de la mesure matérialisée de réflexion (10 ; 110 ; 210 ; 310), sur lesquelles sont disposés de manière plane l'au moins un réseau de séparation (24 ; 124 ; 224 ; 327) et l'au moins un réseau de fusionnement (28.1 - 28.4 ; 128.1 - 128.4 ; 228.1, 228.2 ; 328.1, 328.2), de manière à ce que,
- après la séparation sur le réseau de séparation (24 ; 124 ; 224 ; 324, 327), l'au moins un faisceau partiel de référence (R1, R2) se propage exclusivement dans le plaque de balayage (22 ; 122 ; 222 ; 322) jusqu'à ce qu'il soit fusionné avec les faisceaux partiels de mesure (M1, M2 ; M1.1, M2.1) sur les réseaux de fusionnement (28.1 - 28.4 ; 128.1 - 128.4 ; 228.1, 228.2 ; 328.1, 328.2).

2. Dispositif de mesure de position selon la revendication 1, **caractérisé en ce que** d'autres éléments à effet optique sont réalisés sous la forme d'éléments réflecteurs (25.1 - 25.4, 29.1 - 29.4 ; 125.1 - 125.4, 7.29.1 - 129.4 ; 225.1 - 225.4, 229.1, 229.2 ; 325.1 - 325.4, 329.1, 329.2) et/ou d'autres réseaux (24, 27 .1 - 27.4, 28.1 - 28.4 ; 124, 128.1 - 128.4 ; 224, 228.1, 228.2 ; 324, 327, 328.1, 328.2) sur les faces avant et arrière de la plaque de balayage (22 ; 122 ; 222 ; 322).

3. Dispositif de mesure de position selon la revendication 1, **caractérisé en ce que** le réseau de séparation et/ou le réseau de fusionnement (24, 27.1 - 27.4, 28.1 - 28.4 ; 124, 128.1 - 128.4 ; 224, 228.1, 228.2 ; 324, 327, 328.1, 328.2) est réalisé sous la forme d'un réseau linéaire monodimensionnel et/ou sous la forme d'un réseau croisé bidimensionnel.

4. Dispositif de mesure de position après au moins l'une des revendications précédentes, **caractérisé en ce que** les signaux de balayage dépendants du décalage (S_{A1}, S_{A2}, S_{A3}, S_{B1}, S_{B2}, S_{B3}) présentent un déphasage l'un par rapport à l'autre qui est défini de manière réglable par configuration de l'au moins un réseau de fusionnement (28.1 - 28.4 ; 128.1 - 128.4 ; 228.1, 228.2 ; 328.1, 328.2).

5. Dispositif de mesure de position selon au moins l'une des revendications précédentes, **caractérisé en ce que**, dans l'unité de balayage (320),
- un faisceau provenant de la source lumineuse subit une séparation en un faisceau de mesure (M) et en deux faisceaux partiels de référence (R1, R2) sur un premier réseau de séparation (324),
- le faisceau de mesure (M) subit ensuite une séparation en des premier et deuxième faisceaux partiels de mesure (M1, M2) sur un deuxième réseau de séparation (327), et les premier et deuxième faisceaux partiels de mesure (M1, M2) se propagent respectivement dans la direction de la mesure matérialisée de réflexion (310), où les premier et deuxième faisceaux partiels de mesure (M1, M2) sont incidents en différentes points d'incidence et subissent respectivement une séparation en d'autres faisceaux partiels de mesure (M1.1, M2.1), parmi lesquels au moins l'un est amené à être superposé à des fins d'interférence à l'un des faisceaux partiels de référence (R1, R2) sur au moins un réseau de fusionnement (328.1, 328.2).

6. Dispositif de mesure de position selon au moins l'une des revendications précédentes, **caractérisé en ce que** l'unité de balayage (20 ; 120 ; 220 ; 320) comprend une optique de focalisation par l'intermédiaire de laquelle une focalisation d'un faisceau de mesure ou d'un faisceau partiel de référence s'effectue sur une région spatialement délimitée de la mesure matérialisée de réflexion (10 ; 110 ; 210 ; 310).

7. Dispositif de mesure de position selon la revendication 6, **caractérisé en ce que** l'optique de focalisation comprend une lentille de collimation (522a, 522b ; 622) et un diaphragme (524 ; 624) et/ou une lentille de Fresnel (625 ; 725).

8. Dispositif de mesure de position selon au moins l'une des revendications précédentes, **caractérisé en ce qu'**une source lumineuse est disposée à l'extérieur de l'unité de balayage et **en ce qu'**un conducteur de lumière (730 ; 860) est disposé entre la source lumineuse et l'unité de balayage pour l'introduction du rayonnement émis par la source lumineuse.

9. Dispositif de mesure de position selon au moins l'une des revendications précédentes, **caractérisé en ce que** la mesure matérialisée de réflexion (10 ; 110 ; 210 ; 310) comprend plusieurs réseaux linéaires monodimensionnels ou un réseau croisé bidimensionnel, qui sont respectivement constituées d'agencements périodiques monodimensionnels ou bidimensionnels de sections présentant des propriétés de réflexion optiques différentes.

10. Dispositif de mesure de position selon la revendication 9, **caractérisé en ce que**
- la mesure matérialisée de réflexion (10 ; 110 ; 210 ; 310) est réalisée sous la forme d'un réseau croisé bidimensionnel, sur laquelle il se produit une séparation du faisceau de mesure incident en quatre faisceaux partiels de mesure (M1, M2) qui subissent une rétroréflexion dans la direction de l'unité de balayage (20 ; 120 ; 220 ; 320),
- l'unité de balayage (20 ; 120 ; 220 ; 320) comprend en tant que réseau de séparation (24 ; 124 ; 224 ; 324) un réseau croisé bidimensionnel, sur lequel s'effectue une séparation du faisceau incident en quatre faisceaux partiels de référence (R1, R2) et
- l'unité de balayage (20 ; 120 ; 220 ; 320) comprend quatre réseaux linéaires monodimensionnels en tant que réseau de fusionnement (28.1 - 28.4 ; 128.1 - 128.4 ; 228.1, 228.2 ; 328.1, 328.4), sur lesquels sont incidents les faisceaux partiels de mesure et de référence (M1, M2, R1, R2) et
- l'unité de balayage (20 ; 120 ; 220 ; 320) comprend quatre systèmes détecteurs comportant respectivement plusieurs éléments détecteurs (26.1 - 26.6 ; 126.1 - 126.6 ; 226.1 - 226.5 ; 326.1 - 326.6), par l'intermédiaire desquels les signaux de balayage (S_{A1}, S_{A2}, S_{A3}, S_{B1}, S_{B2}, S_{B3}) respectifs dépendants du décalage et déphasés peuvent être détectés.

11. Dispositif de mesure de position selon la revendication 10, **caractérisé en ce que** la mesure matérialisée de réflexion comprend deux réseaux linéaires monodimensionnels, qui sont disposés perpendiculairement l'un à l'autre dans le plan de la mesure matérialisée.

12. Dispositif de mesure de position selon au moins l'une des revendications précédentes, **caractérisé en ce qu'**un ou plusieurs faisceaux partiels de référence (R1, R2) se propagent exclusivement dans l'unité de balayage (20 ; 120 ; 220 ; 320) jusqu'à superposition avec les faisceaux partiels de mesure respectifs (M1, M2) et parcourent un chemin optique dans l'unité de balayage (20 ; 120 ; 220 ; 320) jusqu'à superposition avec les faisceaux partiels de mesure respectifs (M1, M2), lequel chemin correspond approximativement au chemin optique parcouru jusqu'à superposition du faisceau partiel de référence respectif (M1, M2).

13. Utilisation d'un dispositif de mesure de position selon au moins l'une des revendications précédentes dans un microscope à sonde à balayage, dans lequel la déviation spatiale d'une flèche (1000) peut être déterminée au moyen du dispositif de mesure de position, sur la face inférieure duquel est disposée une tête de sonde à balayage (1050) et sur la face supérieure duquel est disposée la mesure matérialisée de réflexion (1010).
